# EUROPEAN PATENT SPECIFICATION

(11) **EP 4 048 841 B1**
(45) Date of publication and mention of the grant of the patent: **05.06.2024**
(21) Application number: 20829963.6
(22) Date of filing: 23.10.2020
(51) Int. Cl.: E02D 3/12, E02D 27/48, E21B 47/107, G01V 1/40

(54) **PROCESS FOR CONSOLIDATING THE SOIL BY CYCLIC INJECTIONS OF EXPANDING POLYURETHANE RESINS**
VERFAHREN ZUR BODENVERFESTIGUNG DURCH ZYKLISCHE EINSPRITZUNGEN VON EXPANDIERENDEN POLYURETHANHARZEN
PROCÉDÉ DE CONSOLIDATION DU SOL PAR INJECTIONS CYCLIQUES DE RÉSINES DE POLYURÉTHANE EXPANSIBLES

(30) Priority: 25.10.2019 IT 201900019789
(43) Date of publication of application: 31.08.2022
(73) Proprietor: Siano, Paolo, 75020 Paris (FR)
(72) Inventor: SIANO, Emiliano, Avellino (IT); CERRATO, Francesco, Salerno (IT); FIORENTINO, Antonino, Pagani (SA) (IT); SIANO, Paolo, 75020 Paris (FR)
(74) Representative: Benetazzo, Flavia
(86) International application number: PCT/IB2020/059995
(87) International publication number: WO 2021/079346

(56) References cited:
- EP-A1- 1 914 350
- DE-A1- 10 105 658
- GB-A- 2 396 011
- IT-A1- RE20 060 020
- US-A1- 2005 246 131
- US-A1- 2015 159 477

## Description

### State of the art

The invention in question relates to a soil consolidation process by means of injections of expanding polyurethane resins with the aim of improving mechanical and water properties.

### State of the art

As is known, in the field of earth mechanics, a volume of elementary soil can be schematized as a porous medium composed of grains of soil (solid skeleton) and voids. The latter can be not at all, in part or completely occupied by interstitial water: in the first case we speak of "dry soil" (Degree of saturation S = 0), in the second case of "partially saturated soil" (0 <S <1), while when all the voids are occupied by water, of "saturated soil" (S = 1).

When the said elementary volume is subject to the application of an external load, depending on its intrinsic permeability, it establishes a stress state inside it which corresponds to a deformation. In the case of cohesive soils (low granulometry, therefore low permeability) the extent and duration of the deformations, with the same applied load, are closely related to the degree of saturation of the medium and its deformations are deferred over time. In this case we can speak of "consolidation".

In granular soils (with high granulometry, therefore with high permeability) the deformations associated with a given load are instead immediate.

When these observations are transferred from the microscale (elementary volume) to the macroscale (natural volume), it appears evident as a mass of natural ground - imagined as a multitude of elementary volumes - when subjected to external actions (application of loads, variations in the degree of saturation , etc ...) can deform by varying its initial volume with a corresponding variation of the void index and / or the degree of saturation.

In the field of civil engineering, these geological-geotechnical aspects are of primary importance not only in the design, but also in the operating phase of the foundation structures of any building (building, flooring, etc ...). In the process of transferring loads from the structure to the ground, what needs to be guaranteed is the balance of the soil-foundation node, to which the stability of the superstructure is linked.

Any alteration of the foundation soil of an existing building could be the potential cause of its failure. These failures can compromise the equilibrium conditions of the superstructure, with the consequent appearance of deformations and crack patterns on the structural and non-structural elements.

The triggering causes of land subsidence can be divided into anthropogenic and natural. Anthropogenic causes, for example, are the run-off of the ground linked to leaks from water pipes, the execution of excavations near the foundation soils, the vibrations on significant volumes induced by vehicular traffic. Among the possible natural alterations, however, are frequent those related to variations in the water content of the soil, often linked to variations in climatic conditions (especially if extreme - long periods of drought alternating with long rainy periods). This eventuality, especially in the case of clayey soils, causes the well-known cyclical phenomenon of soil withdrawal and swelling with associated volume variations and consequent stress induced to the superstructure: thrust during swelling, relaxation during shrinkage. The alterations of the ground induced by the oscillations of the groundwater level, or by the action of the root system of the nearby vegetation are also natural.

Faced with phenomena of this type - capable of inducing pathologies on the superstructure such as deformations, injuries and rigid inclinations of artifacts - in order to re-establish the conditions of stability it is of primary importance to analyze the pathology first, then carry out any structural and / or geological investigations. geotechnical, take into consideration the different applicable solutions among those possible, select and design the one deemed most appropriate.

Among the different "traditional" solutions, as they have already been used for several decades, there is undoubtedly that of transferring the loads of the structure onto more competent layers of soil, through the creation of new deeper foundation elements. Downstream of the intervention, the by-passed and "damaged" layers of soil will no longer have any bearing function.

When the mechanical characteristics of the ground allow it, another known and existing solution is to make a widening of the base of the existing foundation: the increase of the support surface, under the same load, considerably reduces the stress on the soil layers. of foundation, with consequent recovery of the equilibrium at the ground-foundation node.

Traditional repair interventions have in common the fact that they are characterized by an average long duration, but nevertheless present a high level of invasiveness.

In fact, for their execution, drilling operations of medium-large diameter, punctual or linear excavation are necessary, which, especially in contexts with reduced accessibility, are often difficult to apply.

Faced with these limitations, for the past few decades technologies have been increasingly used that aim to improve the quality of the bearing soil by carrying out injections of cement ("jet grouting") or polyurethane chemical formulations.

In the case of cement injections, it is necessary to use instruments capable of generating high injection pressures to transfer sufficient energy to the cement mixtures to fracture the soil and ensure its penetration and diffusion. The subsequent hardening of the mixture favors the consolidation and improvement of the bearing capacity of the soil.

In the case of polyurethane resin injections, on the other hand, the expanding capacity of the resin is exploited to "move" and consolidate the masses of soil. Today, the chemical industry is able to produce polyurethane systems with mechanical characteristics and expandable capacity that can be modulated according to the desired objectives.

In general, an expanded polyurethane system is the result of a chemical reaction between a polyol and an isocyanate. These two components, if taken separately, occur in a liquid state. If mixed, according to an adequate dosage, they give rise to a chemical reaction capable of producing a single stable and inert final formulation: polyurethane. Between the mixing and polymerization phases, the chemical reaction is associated with an increase in volume accompanied by a release of heat (exothermic reaction).

In the specific case of consolidation, the mixing phase takes place above ground in order to ensure the complete reaction of the entire volume of the two components: the products are injected into the ground a few seconds after complete mixing (formation of a single formulation) through a special injection terminal.

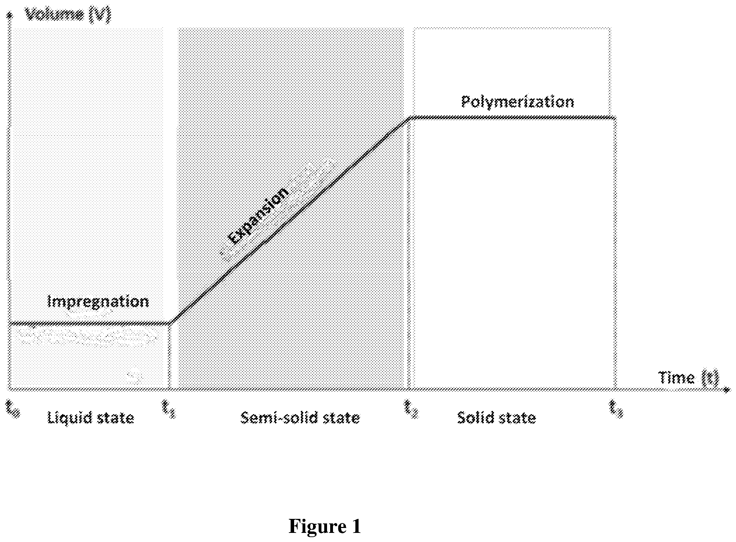

Fig. 1 shows the typical expansion diagram of a polyurethane formulation from which it is observed that once the mixing is finished (t = t0), the obtained formulation is injected into the ground through small diameter pipes, previously installed thanks to to the realization of a special perforation performed by means of a manual drill. The still liquid formulation comes out of the tube at the desired depth and begins by impregnating the surrounding soil (impregnation phase, t0 <t <t1). After a certain time, which varies according to the composition of the formulation, the mixture increases in volume (expansion phase - t1≤t <t2) and this until the energy generated by the chemical reaction runs out (t = t2) and the product polymerizes becoming stable and inert (polymerization phase, t2≤t≤t3).

The strong expanding power is capable of generating a mechanical action on the ground (consolidation) thanks to the increase in the density of the grains, the filling / crushing of the voids and the displacement of interstitial water.

These mechanical effects produce an increase in the lift of the volumes of soil impacted by the treatment, as well as a reduction in the overall permeability of the medium with a consequent improvement in water behavior.

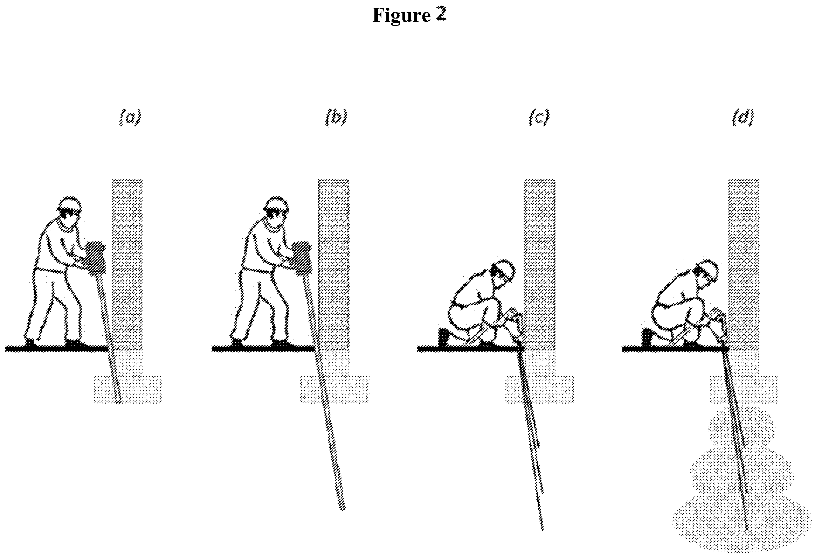

For several decades there have been many patented procedures dedicated to the consolidation of soils by injections of expanding resins. As exemplified in Fig. 2 (sectional views of a generic foundation system during the operational phases), for a standard intervention all the procedures include the following phases:
I. The execution of small diameter holes through the foundation (a), generally positioned at a distance in plan varying between 0.50 m and 1.50 m (value which generally corresponds to the range of action of the formulation in a cohesive and granular);
II. continuation of the same drilling in the soil layers in need of treatment up to the desired depth (b);
III. installation of a series of small diameter pipes (c) implanted in the ground at different depths so as to have more injection points on the same vertical;
IV. resin injection through an injection terminal connected to a suitably equipped injection unit (d).

The discriminating factor of existing proceedings lies in the method of control of the proceedings.

The patent EP0851 064, for example, provides for the execution of injections of expanding polyurethane resins in the ground and the execution of a "continuous monitoring by laser level or other system" of the lifting of the above-ground structures resting on the ground being treated.

In fact, with reference to a generic injection point, once the consolidating actions of the formulation in the expansion phase in the soil have been exhausted (filling voids, displacement of interstitial water, thickening of grains, etc.), the increased conditions of confinement in the surroundings of the injection point, after a certain number "n" of injection cycles, are likely to generate a lifting of the soil and / or the structure above the injection cycle "n + 1".

In this way, when the equipment signals a start of lifting of the construction or the ground surface, it generally means that the compaction of the soil around the injection point has reached very high levels and that are generally higher than the minimum values required.

It is clear that this procedure is based on a monitoring of an indirect effect of the expansion on the structural works above ground (the lifting), without the possibility of directly verifying what happens in the soil impacted by the treatment, the origin of the problem. Although it is a valid continuous control of the intervention, it is evident that such a procedure does not provide any information about the correct distribution of the product.

In fact, it is entirely legitimate to think that a correct consolidation does not correspond to a lifting of the structure or of the land adjacent to the treatment areas. This eventuality is all the more probable the higher the degree of saturation and the levels of confinement of the soil subject to treatment; in particular, the impulse induced by the expanding force of the formulation could generate a redistribution of the interstitial pressures, which in the vicinity of the injection point, results in an increase in these pressures accompanied by a potential lifting.

Such an eventuality, even if confirmed by precise geotechnical tests along a specific vertical, would lead us to think that the intervention is bringing about the desired effects without evaluating the potential variability of the pore pressures (dissipation) and / or the degree of saturation of the treated soil related to the seasonal cyclicality. These phenomena could induce new relaxation and / or subsidence of the ground with further consequences on the structure.

Furthermore, it is equally reasonable to think that during the treatment no lifting occurs due to (i) an excessive load of the superstructure and of the overlying soil column with respect to the expanding force (probability directly proportional to the depth of injection), (ii) a possible impossibility of creating a real confinement action (soils with a high void index), (iii) an incorrect path of the formulation in the expansion phase (leakage from the area of influence of the seabed structure and / or dispersion of the formulation in areas not significant).

Patents EP1914350 and EP2543769 were developed to make up for the aforementioned lack of the existing state of the art linked to the absence of direct monitoring of the land.

Both patents provide, during the injection, a geophysical monitoring of the soil subject to treatment through the acquisition and processing of 3D electrical resistivity tomographies. The appreciation of the mechanical improvement is performed with penetrometric tests.

Indeed, the knowledge of the distribution of electrical resistivity in the domain of interest, if properly correlated to other site-specific geological-geotechnical parameters, has the potential to model and spatially localize homogeneous soil volumes by degree of saturation and / or porosity (overcoming the punctual nature of traditional geological-geotechnical tests as well as being able to investigate volumes of soil that are difficult to access) often at the origin of the subsidence itself.

The electrical resistivity measurements, once acquired and appropriately inverted (inversion process) and related to the geotechnical investigations, return a "three-dimensional geoelectric model" of the investigated subsoil from which representative sections of the geotechnical problem can then be extracted.

However, a geoelectric model obtained from an electrical resistivity acquisition campaign is representative of the conditions of the study domain referring to a certain instant "t", that is, the one corresponding to the time of acquisition of the measurements.

The patent EP1914350 provides for the execution of "expanding injections in a targeted manner, thanks to the results progressively obtained from the tomography of the 3D electrical resistivity". The sequence and quantities of product to be injected are defined as a function of the impacts that the injections induce to the distribution of electrical resistivity observable in the volumes of soil treated during construction by comparing one geoelectric model and the next. The electrical resistivity measurements are then acquired, inverted and studied before, during and after the injections. Soil treatment is carried out until "the chemical-physical characteristics of the transferred volume are standardized with those of neighboring volumes of land not transferred and taken as a reference".

The same applicant, with the introduction of the patent EP2543769, found that "it is not always possible to comfortably dispose of a volume of neighboring land that has not been transferred which, due to its chemical, physical and structural characteristics, can be taken as a reference in the subsequent stabilization and homogenization process of the volume of land sold ".

EP2543769 provides that the "effects induced by sequential and targeted injections of expanding mixtures in the volumes of soil subject to subsidence are recognized by measuring the percentage variation of the electrical resistivity Δρ (%) over time" (with ρ = electrical resistivity). The treatment according to the teachings of the patent EP2543769 is carried out "until the sequential differences between the last condition reached in the N-th injection ΔρN in the soil being treated compared to the one previously detected, or in the N-1 injection ΔρN -1, will not return a gradient that has values between ± 5% ".

In both procedures (EP1914350 and EP2543769), without prejudice to the usefulness and reliability of the information provided by electrical resistivity tomographies to support a consolidation intervention by injection of expanding resins, the use of geophysical instrumentation does not allow to locate in an effectively direct manner and in useful and real time the action that the formulation exerts on the ground in the expansion phase. In fact, the results obtained from sequential electrical resistivity tomographies take place in "almost real" time and analyzed ex post, when the quantities of injected formulation have already been introduced into the soil and the related effects have already occurred.

EP2543769 talks about "making the consolidation intervention more economical and targeted by being able to reach the final required condition and / or the maximum possible improvement of the volume of soil subject to subsidence, with the quantity of injection mixture actually necessary, thanks to the continuous measurement of the trend of the percentage change in resistivity that allows you to establish when it is time to stop the treatment ".

Immediate tomographic acquisitions, subsequent to the injection of a certain quantity of formulation, can detect an insufficient variation in electrical resistivity which therefore leads to the injection of further volumes of formulation, underestimating the hypothesis that what has been injected up to that moment has "preferred "Act in insignificant regions (outside the pressure bulb, under the pavements).

Between the operations of acquisition, inversion and processing of an electrical resistivity tomography and the subsequent one, there is a certain period of time (time-laps monitoring), during which site operators do not have any instrumentation to perform the correct dosage of quantities of formulated and to verify in good time and real their effect during construction, with the risk that unwanted and unmanageable effects may occur once the formulation has been injected and is now expanding (over-consolidation, excessive lifting of the artifact and / or its ancillary works).

In general, it is necessary to start from the assumption that, in the case of the application of expanding polyurethane formulations in the soil, the expansion path of the formulation remains highly uncertain and strictly influenced by the site-specific confinement conditions: water content, void index , level of heterogeneity, as well as the consolidation effect of the injection cycles prior to the current one. Each injection cycle, which corresponds to a certain amount of formulation, will therefore expand by following the simplest path, that is, the least confined one until the volume considered is completely saturated.

It is above all the random character of the expansion path of the formulation and the absence of an instrumentation that can effectively "follow" the action in the ground up to its complete polymerization, which causes a certain number of difficulties technical-operational order are found in the existing state of the art, with a potential impact on the effectiveness of the intervention.

### Scope of the invention

The object of the present invention is to overcome the drawbacks highlighted above by providing a procedure for consolidating the soil by means of cyclic injections of expanding polyurethane resins which allows the action of the formulation to be located and monitored continuously and in real time. expansion phase.

A particular object is to provide a procedure for soil consolidation by cyclic injections of expanding polyurethane resins which, through continuous monitoring, allows to carry out the appropriate actions in useful and real time on the process parameters during construction. according to an observational method, to guarantee a mastery of site operations and a correct execution of the intervention.

These objects, as well as others that will become more apparent hereinafter, are achieved by a process in accordance with claim 1, to which reference is made for greater conciseness of the explanation.

Advantageous embodiments of the invention are obtained in accordance with the dependent claims.

### Best modes of carrying out the invention

With reference to the attached figures, exemplary but not exclusive of the invention, some preferred embodiments of the method according to the invention are described, generally applied on foundation soils of existing artifacts that show signs of instability, such as lesions or deformations of the structural elements and not (post-accident curative interventions).

The procedure can also be carried out where the volumes of foundation soil are in need of treatment in view of an increase in permanent or accidental loads on the overlying structure, such as for example raising and / or installation of heavy machinery (preventive interventions).

The procedure essentially consists in carrying out injections of expanding resins under acoustic control with the aid of acoustic detection means, which will preferably but not necessarily be one or more high-sensitivity geophones of a known type, or other equivalent detection devices.

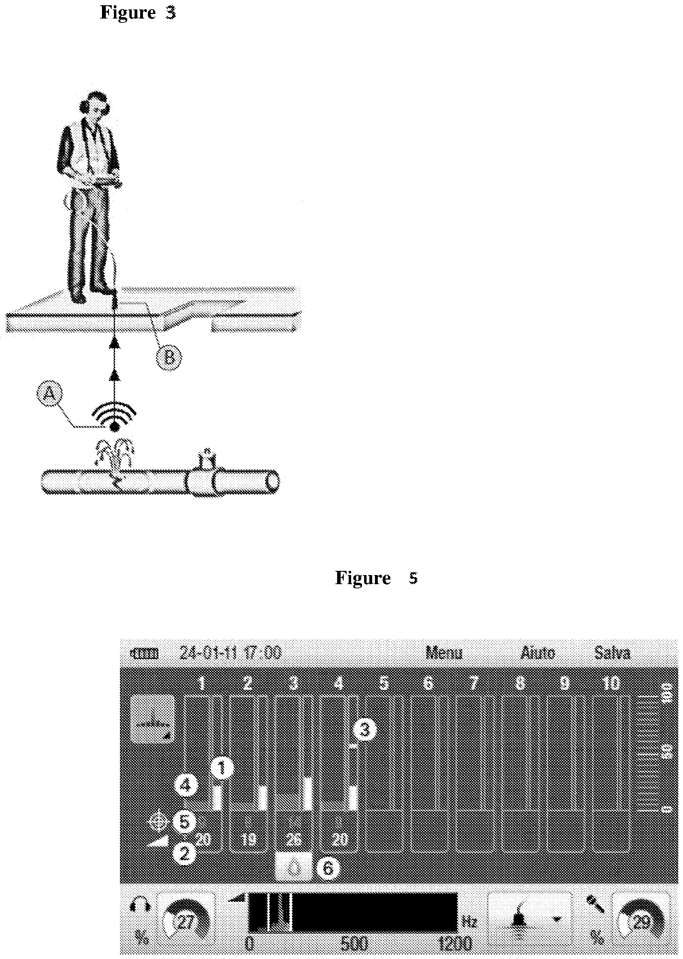

Fig. 3 shows a typical application of a geophone as part of the search for leaks on pressurized water systems: the flow of water that comes out of the leak at a certain speed generates an oscillation of the surface on which it impacts. The sound due to the impact with the ground (water-ground friction) expands from the leak in a circular way (A) and is perceptible on the surface in the vicinity of the vertical of the leak point through a high sensitivity geophone (B) which transforms them in audible sounds. Generally the frequency of this signal is between 30 and 700 Hz (Hertz).

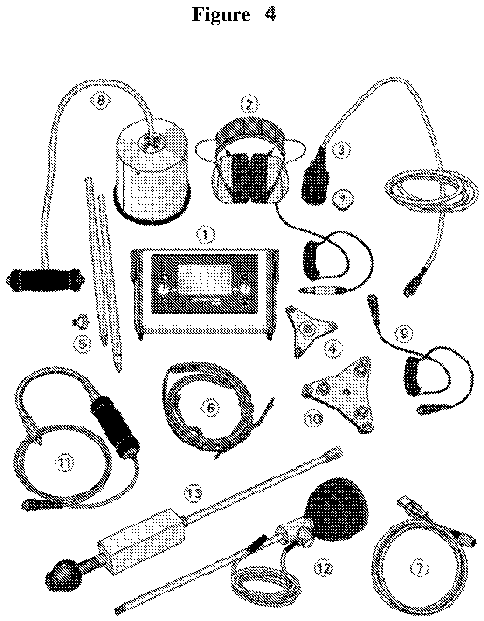

The detection means can be implemented with one or more accessories such as, as illustrated in Fig. 4, (1) control unit (2) headphones with noise reduction system, (3) Universal microphone with magnetic adapter, (4) Adapter for tripod, (5) Extension with tip, (6) shoulder strap, (7) PC interconnection cable (USB), and optionally (8) Bell microphone with wind protection (with safety cut-out), (9) Cable connection plug, (10) Tripod adapter for bell microphone, (11) Hydrogen hand sensor, (12) Hydrogen soil sensor with integrated pump, (13) Pump kit for upgrading ground sensors without pump.

The latest generation geophones on the market are able to detect a range of sound frequency ranging from 0 to 4,000 Hertz (Hz) and can work in different modes (smart mode, volume frequency mode, volume mode) and perform short measurements and long term.

Once the preliminary calibration operations have been performed (sensor sensitivity adjustment, frequency filter setting, volume setting, time interval setting for long-term measurements), the instrumentation is able to detect and show on the control unit (Fig. 5):
- the extension of the sound on a sound level scale from 0 to 100%. The gray bar (figure 5 - n.1) represents the minimum measured value, ie the lowest sound detected for the location of the leak. This value is also displayed as a number under the bar (figure 5 - n.2). The value measured during construction is instead displayed with a smaller bar on the same scale (Figure 5 - 3);
- the Smart indicator (if the model of the instrument allows it) resulting from a complex series of calculations and methods of analysis (the higher the value of the smart indicator, the more reliable the information on the loss will be. According to the rule of thumb, the more the nearer the leak is, the higher the value of the smart indicator bar. The indicator is displayed both in the form of a bar (figure 5 - n.4) and in figures (figure 5 - n.5) on a scale from 0 to 100%;
- the frequency spectra (Figure 5 - n.6) of the sounds detected in a given preset range (often also presented as a color gradient)

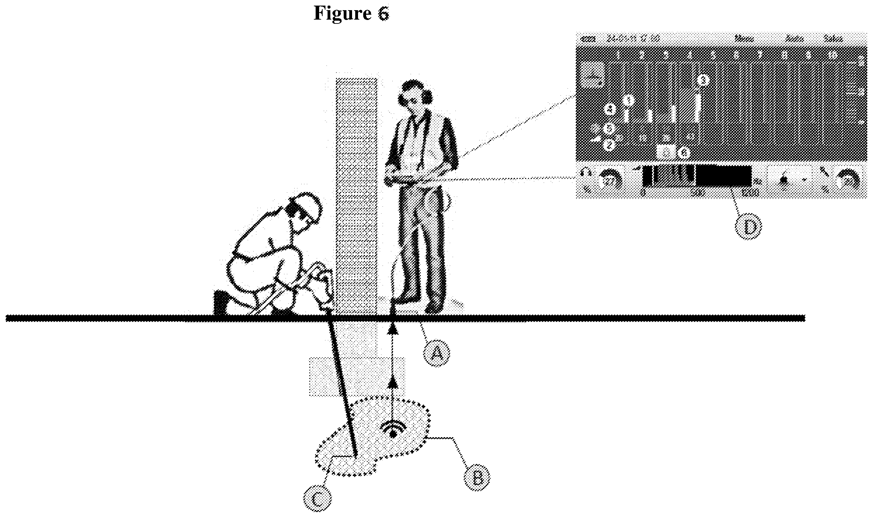

In the case of soil consolidation interventions through injections of expanding polyurethane resins, the noises generated by the resin-soil friction as well as by the effects of rubbing and thickening of the grains, empty filling, displacement of interstitial water (if present), can be perceived on the surface by the high sensitivity geophones (Fig. 6 - A) on the verticals of the surroundings close to the volume of soil impacted by the treatment (Fig. 6 - B) and to the injection point (Fig. 6 - C).

On the control unit (Fig. 6 - D) to the noise generated by the consolidating action it is possible to attribute the extension, the smart indicator and the frequency spectrum detected below, defined as acoustic parameters (Fig. 6 - from n.1 to n .6).

The use of such monitoring is likely to generate an increase in the effectiveness of the treatment together with a saving on the consumption of the injected product with the related environmental benefits as it allows:
- a 4D acoustic geolocation (x, y, z, t) of the effects induced by the expanding formulation in useful and real time, to guarantee that all cycles of injected product act in the desired volumes of soil and not unnecessarily outside;
- an acoustic monitoring of the induced effects of the expanding formulation up to complete saturation and homogenization of the volumes of soil treated with the right amount of product and without inducing unwanted effects such as over-consolidation and / or improper lifting of the structure and its ancillary works.

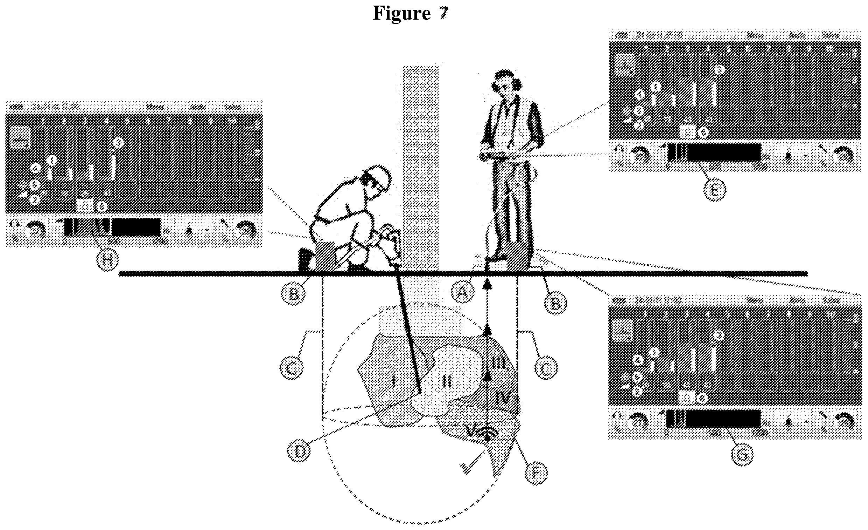

From Fig. 7 it is observed that the treatment of an injection point takes place through a total volume of formulation injected in several injection cycles, each of which will have an effect on a certain volume of soil. By way of example, four injection cycles have been performed and a fifth is in progress; each injection cycle had an impact on the regions of the bulb of the pressures dashed and numbered from I to V. These cycles are interspersed with regular more or less long pauses of the order of a minute, generally coinciding with the expansion time of the formulation.

The intervention procedure involves the use of a mobile geophone (Fig. 7 - A) as well as a sufficient number of fixed geophones (Fig. 7 - B).

The mobile geophone (Fig. 7 - A) is moved during the work on the ground level by a site operator in the vicinity of the injection point.

The fixed geophones (Fig. 7 - B), possibly equipped with a luminous LED as well as an audible alarm, are placed on the ground level at a certain distance around the injection point on a border line beyond which wants the product to act (for example, with reference to figure 7 on the circumference obtained from the vertical projection of the pressure bulb on the ground level, Fig. 7 - C).

During the pause between the i-th injection cycle and the next, the function of the mobile geophone (Fig. 7 - A) is to determine for each injection cycle the consolidation path of the formulation in the expansion phase up to to its complete polymerization. In fact, the noise generated by the injected formulation begins to occur in conjunction with the beginning of its expansion. Operationally, this operation consists in determining for each injection cycle the vertical measurement around the injection point along which the extension and the smart indicator are maximum.

The resumption of injections between the i-th injection cycle and the next (cycles relating to the same injection point), on the other hand, occurs once the mobile geophone no longer detects any noise, i.e. when the injected formulation has once the expansion phase is finished and enters the polymerization phase.

This modus operandi makes it possible not to overlap injection cycles: the volume of formulation corresponding to each injection cycle acts when the previous ones have polymerized and confined the neighboring areas all around the injection point, to the advantage of a more effective intervention, limited to the area of interest and therefore more sustainable in terms of economic and environmental costs.

The function of the fixed geophones (Fig. 7 - B), on the other hand, is to warn site operators that the formulation is starting to produce a noise - and therefore to act - along their measuring vertical, peripheral and secondary. compared to the central and primary injection monitored by the mobile geophone.

As long as the acoustic parameters emitted by the injection cycle in progress (Fig. 7 - D) detected by the fixed geophones (Fig. 7 - E, F) are not comparable to those detected by the mobile one (Fig. 7 - G), there is the guarantee that the formulation is acting within the desired frontier following different consolidation paths to guarantee a targeted and effective treatment in the volume of interest and not unnecessarily outside.

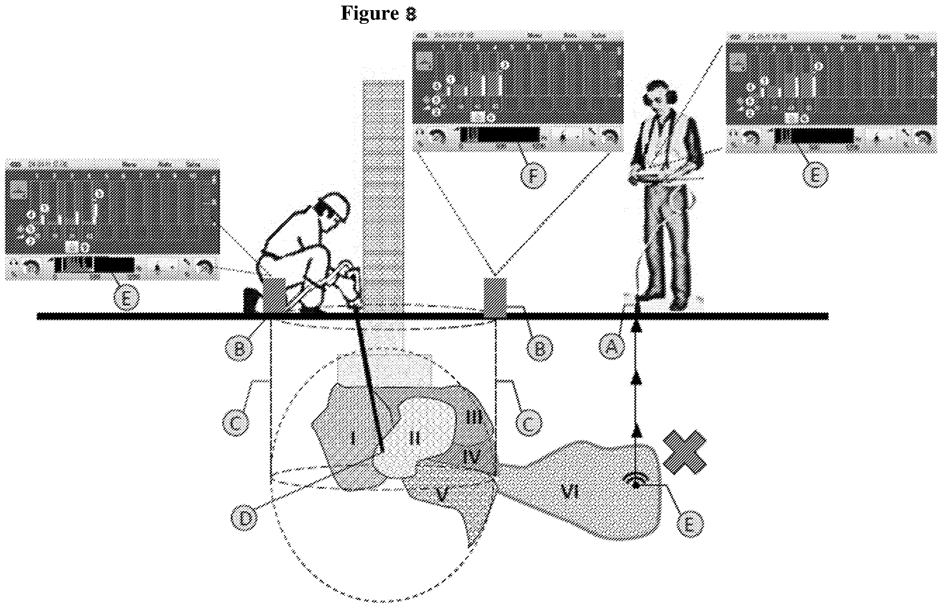

The figure is representative of a situation in which the expanding action of the formulation being expanded has exceeded the boundaries of the volume of interest (Fig. 8 - D) with the associated risks linked to any damage or secondary effects on the underground services and / or of ancillary underground works - deformation, fracturing and / or undermining - with or without filling (Fig. 8 - H).

In this regard, prior to the treatment, the execution of a mapping of the systems or ancillary works that is to be preserved from any secondary effects induced by the treatment, would allow the use of geophones (fixed or mobile) also with the aim of preserving the 'integrity.

In fact, by ideally positioning fixed geophones on the ground level in correspondence with the vertical of the plant and suitably shifted towards the injection point by a certain safety margin, it will be possible to interrupt the treatment of the injection point being monitored (temporarily or permanently ) if sounds approaching the system itself are detected (Fig. 8 - D).

In addition to preserving the integrity of classic systems, the innovation in question allows for a real response to the mitigation of the "clogging" risk of drainage systems which, by their nature, are particularly vulnerable (highly permeable) and exposed (located in proximity of the foundation soils).

Furthermore, the use of such monitoring can in some cases reduce the risk of the occurrence of improper lifting of the above-ground works (of the building itself or of its accessory elements) even before the latter suffer them, thanks to the possibility of interrupting the treatment of an injection point when the acoustic parameters measured during construction show a tendency towards stabilization, a situation which corresponds to the saturation of the volume of soil around the generic injection point. The careful monitoring especially of the frequency of the sound induced by the i-th injection in progress represents another potential element of interest that can limit improper lifting of the above-ground works (of the building itself or of its accessory elements).

In fact, if this undergoes a sudden increase it will mean that the product is rising towards the surface (the frequency of the noise measured is inversely proportional to the depth), with a significant increase in the risk of unwanted side effects, well known in the sector.

The acoustic monitoring phase of the induced effects of the expanding formulation provides that, during the first injection cycles, the noise generated by the expanding formulation is associated with frequency spectra and levels of sound indicators which are gradually less oscillating. This is due to the fact that the consolidating action of the formulation, at the beginning of the treatment, generates multiple overlapping effects such as filling voids, displacement of interstitial water (if present), as well as a start of consolidating action, to which more superimposed sounds correspond . The frequency spectra and the levels of oscillation of the extension will be all the more oscillating the more heterogeneous the volumes subject to the treatment are.

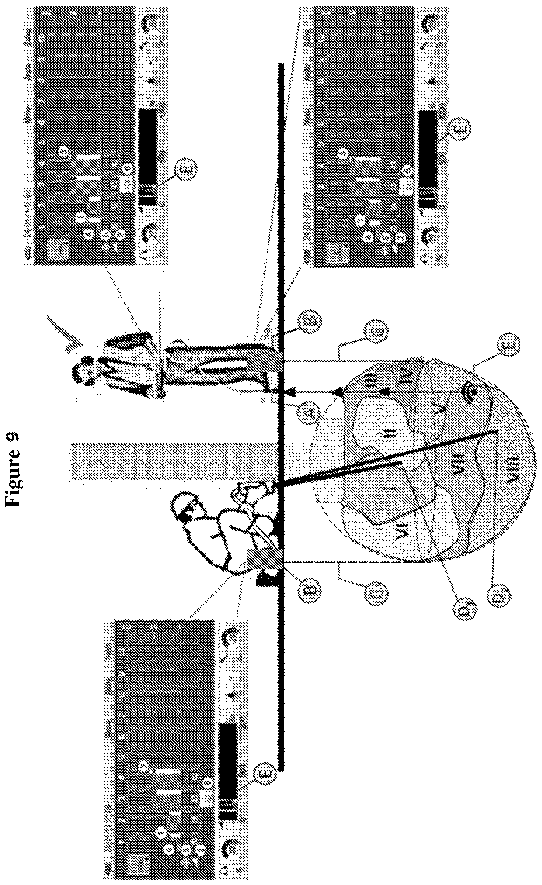

As the treatment progresses, the growing homogeneity found in the soil - together with the growing confinement conditions all around the injection point - means that the only action induced by the treatment remains the consolidating one (only the action of thickening the grains) with a corresponding stabilization of both the extension and the frequency spectra with respect to what was detected at the beginning of the treatment. When the condition is reached wherein
- the fixed geophones (Fig. 9 - B) begin to detect noises in the peripheral area having acoustic parameters comparable in oscillation and order of magnitude to those detected by the mobile geophone (Fig. 9 - A) used centrally;
- the mobile geophone (Fig. 9 - A) has detected all the 360 ° radial consolidation paths all around the injection point (Fig. 9 - A - from I to VIII injection cycle)
- the mobile geophone (Fig. 9 - A) detects that additional injection cycles do not cause any change in the frequency spectra and sound indicators compared to what was recorded at the start of the treatment (stabilization of the acoustic parameters) It means respectively that
- -the consolidating action of the expanding formulation, starting from the injection point (Fig. 9 - D1 or D2), also acts on the peripheral areas of the domain of interest (Fig. 9 - C);
- it acted following all possible consolidation paths, starting with those with lower contrast energy (voids, cavities, not very compact masses) to gradually move to more compact masses of soil to guarantee a newfound homogeneity of the treated volumes;
- additional injections in that volume of interest will not produce significant effects and improvements compared to what has already been achieved, so the current injection point can be considered treated and it is therefore possible to move on to the next point.

The intermediate extensions and frequency spectra (those detected during construction), but above all the endings (the latest measurements performed) recorded point by point are downloaded to a computer to support construction site activities.

Their comparison will make it possible to evaluate the level of homogeneity obtained along the development of the intervention areas and, if necessary (in the case of non-comparable and / or overlapping data due to fluctuation and / or order of magnitude), the procedure provides for the execution of additional and targeted perforations and injections in the volumes of soil that did not return comforting and sufficiently evident signs of the treatment.

Since these are site-specific parameters, strictly linked to the geological and geotechnical variables, as well as to the response of the soil to injections, the conditions described above cannot be defined upstream, but with an observational approach that involves calibration operations between "injected quantities" and "acoustic parameters" (frequency and extension spectra) measured in the first injection points of the intervention, with the aim of better calibrating the treatment in the following points.

It will therefore be possible to define correspondences between the characteristic acoustic parameters (frequency spectra and extensions) and the quantities of formulation used for each injection point representative of the various treatment phases: start / end empty filling phase, start / end displacement phase interstitial water, phase of beginning / end of consolidation. This information allows you to define an observational criterion for work progress.

Operationally, this hyperaction is possible thanks to the comparison and superposition of the frequency spectra and sound levels detected on a support computer on which the measurements are progressively downloaded.

With reference to the same figure 7, a generic situation of acoustic monitoring during construction is shown when the fifth injection cycle is being carried out and detected (Fig. 7 - D) and the operator is moving the mobile geophone (Fig. 7 - A) in the vicinity of the injection point to determine its path and zone of influence (i.e. the vertical ones with maximum sound extension values and smart indicators, Fig. 7 - G) and at the same time validating the correct localization of the effects (inside the pressure bulb, Fig. 7 - D).

Meanwhile, the locations of the four areas of influence of the four cycles previously injected have already been validated (already in the polymerization phase, Fig. 7 - from I to IV cycle). In the example of Figure 7, with the progress of the treatment, from the first to the fifth injection cycle, it will be possible to observe that there is a region of the pressure bulb in which the five injected cycles have mainly acted, namely the upper right one. This is due to the comparability that exists between the acoustic parameters measured during construction by the mobile geophone (Fig. 7 - G) and by the fixed right one (Fig. 7 - F), i.e. same (or comparable) extension values and / or frequency spectra.

A configuration in progress such as the one shown by way of example in Figure 7, must therefore include a treatment aimed at the upper left portion as well, due to the incomparable acoustic parameters detected by the mobile geophone (Fig. 7 - G) and from the fixed one on the left (Fig. 7 - E). The latter, in fact, has significantly lower extension values and wider frequency spectra. Operationally, the continuation of the current injection point treatment involves the injection of further controlled cycles in the same injection point: since the first five cycles acted on the upper left portion of the volume, the renewed and increased confinement conditions of this region induced by the treatment will induce subsequent cycles to act in portions not yet impacted by the treatment characterized starting from a certain instant by a lower energy.

If subsequent injection cycles do not induce any effect on the region in question, the procedure involves the execution of additional and targeted perforations and injections in the volumes of soil that have not returned comforting and sufficiently evident signs of the treatment.

The procedure includes classic geotechnical investigations such as penetrometric and / or pressure gauge tests.

These tests can be performed both before the start of the treatment, to define the vertical and horizontal spacing of the injection points (also variable according to the range of action of the formulation used), and during the treatment, to verify and ascertain the effectiveness of the treatment in progress, and also after treatment, to verify and quantify the mechanical improvement obtained.

Furthermore, the use of such monitoring can in some cases reduce the risk of the occurrence of improper lifting of the above-ground works (of the building itself or of its accessory elements) even before the latter suffer them, thanks to the possibility of interrupting the treatment when the characteristic acoustic parameters highlight the saturation of the volume around the generic injection point. Another potential interest that can limit improper lifting of the above-ground works (of the building itself or of its accessory elements) is the careful monitoring, above all, of the frequency of the noise of the i-th injection in progress.

In fact, if this undergoes a sudden increase it will mean that the product is rising towards the surface (the frequency of the noise measured is inversely proportional to the depth), with a significant increase in the risk of unwanted side effects, well known in the sector.

## Claims

1. Process for consolidating a soil by cyclic injections of expanding polyurethane resins, comprising the following steps:
a) injecting by means of one or more tubes of a formulation of one or more expanding polyurethane resins [Fig. 6];
b) carrying out an acoustic monitoring during injection by means of acoustic detection means to detect the noise of the consolidating action of the injected formulation;
c) locating said expanding formulation by detecting one or more acoustic parameters of the detected sound;
d) iterating said steps for a predetermined number of injection cycles with pauses between successive cycles relating to the same injection point, wherein the subsequent cycle starts when said acoustic detection means do not detect noise;
wherein said acoustic detection means comprise at least one movable detection device adapted to be placed on the vertical of the injection point and one or more fixed detection devices suitable to be arranged peripherally to the injection point to delimit an intervention area.

2. Process according to claim 1, wherein the injection treatment relative to a given injection point is interrupted when the following conditions occur:
- at least one of said fixed detection devices [Fig. 9 - B] located around the injection point detect a noise corresponding to a consolidating action in the peripheral area;
- said mobile detection device [Fig. 9 - A] has detected all the 360-degree radial consolidation paths around the injection point;
- said mobile detection device [Fig. 9 - A] detects that additional injection cycles do not cause any modification of the frequency spectra and of the sound indicators with respect to that recorded at the beginning of the treatment.

3. Process according to any one of the preceding claims, wherein said injection step comprises the following steps:
- executing small diameter holes through the foundation [Fig. 2 - a];
- prosecuting said perforations through soil layers which need treatment up to the desired depth [Fig. 2 - b];
- installing in the appropriately performed perforations one or more small diameter tubes implanted in the soil layers needing the treatment up to the desired depth [Fig. 2 - c].

4. Process according to any one of the preceding claims, wherein said step of monitoring the acoustic parameters is carried out during injection and during the pauses between an injection cycle and the subsequent one relative to the same injection point.

5. Process according to any one of the preceding claims, wherein said acoustic detection means comprise fixed [Fig. 7 - B] and movable [Fig. 7 - A] high sensitivity geophones [Fig. 4] or similar detection devices adapted to transform the detected noise into audible sounds that can be characterized with site-specific acoustic parameters.

6. Process according to any one of the preceding claims, wherein said acoustic parameters are selected into the group comprising frequency [Fig. 5 - n°6], sound indicators [Fig. 5 - n°1 and 2], smart indicators [Fig. 5 - n°4 and 5] and the like.

7. Process according to any one of the preceding claims, wherein the interruption of the treatment for each of the injection points occurs once the objective acoustic parameters in the volume of soil being treated have been reached in all the surroundings of the considered injection point [Fig. 9].

8. Process according to any one of the preceding claims, wherein a calibration and verification step is provided by penetrometer and/or pressiometric tests, carried out before, during and/or after the treatment.

9. Process according to any one of the preceding claims, wherein the treatment can take place on one or more injection points positioned on the same injection vertical [Fig. 2 - d].

## Patentansprüche

1. Verfahren zur Verfestigung eines Bodens durch zyklische Einspritzungen von expandierenden Polyurethanharzen, umfassend die folgenden Schritte:
a) Einspritzen mittels eines oder mehrerer Rohre einer Formulierung aus einem oder mehreren expandierenden Polyurethanharzen [Fig. 6];
b) Durchführen einer akustischen Überwachung während der Einspritzung mit Hilfe von akustischen Erfassungsmitteln, um das Geräusch der Verfestigungswirkung der eingespritzten Formulierung zu erfassen;
c) Lokalisieren der besagten expandierenden Formulierung durch Erfassen eines oder mehrerer akustischer Parameter des erfassten Tons;
d) Wiederholen der besagten Schritte für eine vorgegebene Anzahl von Einspritzzyklen mit Pausen zwischen aufeinanderfolgenden Zyklen, die sich auf denselben Einspritzpunkt beziehen, wobei der nachfolgende Zyklus beginnt, wenn die besagten akustischen Erfassungsmittel kein Geräusch erfassen;
wobei die besagten akustischen Erfassungsmittel mindestens eine bewegliche Erfassungsvorrichtung umfassen, die dazu geeignet ist, auf der Vertikalen des Einspritzpunkts platziert zu werden, und eine oder mehrere feste Erfassungsvorrichtungen, die geeignet sind, peripher zum Einspritzpunkt angeordnet zu werden, um einen Eingriffsbereich abzugrenzen.

2. Verfahren gemäß Anspruch 1, wobei die Einspritzbehandlung in Bezug auf einen gegebenen Einspritzpunkt unterbrochen wird, wenn die folgenden Bedingungen eintreten:
- wenn mindestens eine der besagten festen Erfassungsvorrichtungen [Fig. 9 - B], die um den Einspritzpunkt herum angeordnet sind, ein Geräusch erfassen, das einer Verfestigung im peripheren Bereich entspricht;
- wenn die besagte mobile Erfassungsvorrichtung [Fig. 9 - A] alle radialen 360-Grad-Verdichtungspfade um den Einspritzpunkt erfasst hat:
- wenn die besagte mobile Erfassungsvorrichtung [Fig. 9 - A] erfasst, dass die zusätzlichen Einspritzzyklen keine Veränderung der Frequenzspektren und der Schallindikatoren in Bezug auf das zu Beginn der Behandlung aufgezeichnete verursachen.

3. Verfahren gemäß einem jeden der vorhergehenden Ansprüche, wobei der besagte Einspritzschritt die folgenden Schritte umfasst:
- Ausführen von Löchern mit kleinem Durchmesser durch das Fundament [Fig. 2 - a];
- Fortsetzen der besagten Perforationen durch Bodenschichten, die Behandlungen benötigen, bis hin zur gewünschten Tiefe [Fig. 2 - b];
- Installieren in den angemessen ausgeführten Perforationen von einem oder mehreren Rohren mit kleinem Durchmesser, die in den Bodenschichten bis hin zur gewünschten Tiefe installiert werden [Fig.2 - c].

4. Verfahren gemäß einem jeden der vorhergehenden Ansprüche, wobei der besagte Schritt der Überwachung der akustischen Parameter während der Einspritzung und während der Pausen zwischen einem Einspritzzyklus und dem darauf folgenden Zyklus in Bezug auf denselben Einspritzpunkt durchgeführt wird.

5. Verfahren gemäß einem jeden der vorhergehenden Ansprüche, wobei die besagten akustischen Erfassungsmittel feste [Fig. 7 - B] und bewegliche [Fig. 7 - A] hochempfindliche Geophone [Fig. 4] oder ähnliche Erfassungsvorrichtungen umfassen, die geeignet sind, das erfasste Geräusch in hörbare Töne umzuwandeln, die mit standortspezifischen akustischen Parametern charakterisiert werden können.

6. Verfahren gemäß einem jeden der vorhergehenden Ansprüche, wobei die besagten akustischen Parameter aus der Gruppe der Frequenzen [Fig. 5 - Nr. 6], der Tonindikatoren [Fig. 5 - Nr. 1 und 2], der intelligenten Indikatoren [Fig. 5 - Nr. 4 und 5] und dergleichen ausgewählt werden.

7. Verfahren gemäß einem jeden der vorhergehenden Ansprüche, wobei die Unterbrechung der Behandlung für jeden der Einspritzpunkte erfolgt, sobald die objektiven akustischen Parameter im Volumen des Bodens, der behandelt wird, in der gesamten Umgebung des betrachteten Einspritzpunktes erreicht worden sind [Fig. 9].

8. Verfahren gemäß einem jeden der vorhergehenden Ansprüche, wobei ein Kalibrierungs- und Überprüfungsschritt durch Penetrometer- und/oder Pressiometertests vorgesehen ist, die vor, während und/oder nach der Behandlung ausgeführt werden.

9. Verfahren gemäß einem jeden der vorhergehenden Ansprüche, wobei die Behandlung an einem oder mehreren Einspritzpunkten erfolgen kann, die sich auf derselben Einspritzvertikalen befinden [Fig. 2 - d].

## Revendications

1. Procédé de consolidation d'un sol par injections cycliques de résines polyuréthanes expansives, comprenant les étapes suivantes :
a) injection au moyen d'un ou plusieurs tubes d'une formulation d'une ou plusieurs résines polyuréthanes expansives [Fig. 6] ;
b) réalisation d'un contrôle acoustique pendant l'injection à l'aide de moyens de détection acoustique pour détecter le bruit de l'action consolidante de la formulation injectée ;
c) localisation de ladite formulation en expansion par la détection d'un ou de plusieurs paramètres acoustiques du son détecté ;
d) itération de ces étapes pendant un nombre prédéterminé de cycles d'injection avec des pauses entre les cycles successifs relatifs au même point d'injection, le cycle suivant commençant lorsque les moyens de détection acoustique ne détectent pas de bruit ;
où lesdits moyens de détection acoustique comprennent au moins un dispositif de détection mobile adapté pour être placé sur la verticale du point d'injection et un ou plusieurs dispositifs de détection fixes adaptés pour être disposés à la périphérie du point d'injection afin de délimiter une zone d'intervention.

2. Procédé selon la revendication 1, où le traitement d'injection relatif à un point d'injection donné est interrompu lorsque les conditions suivantes se produisent :
- au moins un des dispositifs de détection fixes [Fig. 9 - B] situés autour du point d'injection détecte un bruit correspondant à une action de consolidation dans la zone périphérique ;
- ledit dispositif de détection mobile [Fig. 9 - A] a détecté toutes les trajectoires de consolidation radiales à 360 degrés autour du point d'injection ;
- ledit dispositif de détection mobile [Fig. 9 - A] détecte que les cycles d'injection supplémentaires ne provoquent aucune modification des spectres de fréquence et des indicateurs sonores par rapport à ceux enregistrés au début du traitement.

3. Procédé selon l'une des revendications précédentes, dans lequel ladite étape d'injection comprend les étapes suivantes :
- exécution de trous de petit diamètre à travers la fondation [Fig. 2 - a] ;
- poursuite de ces perforations à travers les couches de sol qui doivent être traitées jusqu'à la profondeur souhaitée [Fig. 2 - b] ;
- installation dans les perforations réalisées de manière appropriée d'un ou plusieurs tubes de petit diamètre implantés dans les couches de sol nécessitant un traitement jusqu'à la profondeur souhaitée [Fig. 2 - c].

4. Procédé selon l'une des revendications précédentes, dans lequel ladite étape de surveillance des paramètres acoustiques est réalisée pendant l'injection et pendant les pauses entre un cycle d'injection et le suivant par rapport au même point d'injection.

5. Procédé selon l'une des revendications précédentes, où lesdits moyens de détection acoustique comprennent des géophones fixes [Fig. 7 - B] et mobiles [Fig. 7 - A] à haute sensibilité [Fig. 4] ou des dispositifs de détection similaires adaptés pour transformer le bruit détecté en sons audibles qui peuvent être **caractérisés par** des paramètres acoustiques spécifiques au site.

6. Procédé selon l'une des revendications précédentes, où lesdits paramètres acoustiques sont choisis dans le groupe comprenant la fréquence [Fig. 5 - n° 6], les indicateurs sonores [Fig. 5 - n° 1 et 2], les indicateurs intelligents [Fig. 5 - n° 4 et 5] et similaires.

7. Procédé selon l'une des revendications précédentes, dans lequel l'interruption du traitement pour chacun des points d'injection intervient une fois que les paramètres acoustiques objectifs dans le volume de sol traité ont été atteints dans tout l'environnement du point d'injection considéré [Fig. 9].

8. Procédé selon l'une des revendications précédentes, dans lequel une étape d'étalonnage et de vérification est assurée par des essais au pénétromètre et/ou pressiométriques, réalisés avant, pendant et/ou après le traitemen.

9. Procédé selon l'une des revendications précédentes, où le traitement peut avoir lieu sur un ou plusieurs points d'injection positionnés sur une même verticale d'injection [Fig. 2 - d].
